# EUROPEAN PATENT SPECIFICATION

(11) **EP 1 957 316 B1**
(45) Date of publication and mention of the grant of the patent: **05.01.2011**
(21) Application number: 06844010.6
(22) Date of filing: 14.11.2006
(51) Int. Cl.: B60R 9/058

(54) **LOAD CARRIER FOOT FOR CLAMPING A LOAD CARRIER AT A ROOF OF A VEHICLE**
LASTTRÄGERFUSS ZUM FESTKLEMMEN EINES LASTTRÄGERS AUF EINEM FAHRZEUGDACH
PATTE DE FIXATION DE PORTE-CHARGES SUR LE TOIT D' UN VEHICULE

(30) Priority: 15.11.2005 SE 0502510
(43) Date of publication of application: 20.08.2008
(73) Proprietor: Thule Sweden AB, 330 33 Hillerstorp (SE)
(72) Inventor: LARSSON, Fredrik, S-567 91 Vaggeryd (SE); POULSEN, Jonas, S-331 91 Värnamo (SE)
(74) Representative: VALEA AB
(86) International application number: PCT/SE2006/001294
(87) International publication number: WO 2007/058589

(56) References cited:
- EP-A- 0 933 259
- WO-A-00/15465
- DE-A1- 10 127 640
- FR-A- 2 832 371
- US-A- 4 688 706
- US-A- 5 947 355

## Description

### Technical area

The present invention refers to a load carrier foot for clamping a load carrier at an edge portion or a border of a roof of a vehicle, comprising a support plate, which abuts against the roof of the vehicle and having a downwardly bent gripping edge, which grips around one side of the edge portion or the border of the roof of the vehicle, a clamping jaw and a tightening means, which is arranged to move the clamping jaw against the other side of the edge portion or the border of the roof of the vehicle, such that the load carrier foot being firmly clamped around the border of the roof, between said clamping jaw and the gripping edge of the support plate.

### State of the art

A load carrier of introductory described kind is previously known through SE 522 883, which shows a support device to fasten a load carrier to the roof of a vehicle. The support device comprises an essentially rigid hook, which is connected with a load carrier foot and being formed to grip around an edge portion, in shape of a body fold in the area of transition of the roof of the vehicles to the side of the vehicle or the opening of a door. By aid of a screw, the hook is tightened against the load carrier foot to fasten the foot to the vehicle. A support means is fastened to the side of the vehicle in the area beneath the edge portion, wherein the hook having an elongation, which extends from the edge portion and downwardly along the side of the vehicle, where it cooperates with the support means. Thus, the support means forms a gap between itself and the side of the vehicle, which cooperating with the elongation of the hook.

The previously known load carrier functions satisfactory, but requires that said support means being firmly mounted at the vehicle, which result in increased costs.

FR-A-2 832 371 also shows such a load carrier.

### Problem

The problem with a load carrier of known kind is that it can be difficult to fit the load carrier, in such way that the load carrier foot, at each end of the load carrier tube, grips around respective border of the roof. An adjustment screw is commonly used to adapt the load carrier to different tolerances in the roof, which result in a huge cost for the product. In addition, there is a risk that the roof become unnecessary deformed at a possible crash with the vehicle.

### Solution

The purpose with the present invention is to reduce the cost for a load carrier and to reduce the risk for deformation of the roof of the vehicle at a possible crash.

The present invention overcomes the above mentioned disadvantages with a load carrier foot of introductory mentioned kind, which is **characterised in that** said clamping jaw is designed of spring steel with high tensile yield limit, wherein the clamping jaw absorbs occurring tolerances of the border of the roof.

### Brief description of the figures

A load carrier foot according to the present invention will hereafter be described with references to the enclosed figures, in which:
figure 1 is a schematic view in perspective of a load carrier foot, according to the present invention, in a non-tightened position,
figure 2 is a schematic view in perspective of the load carrier foot, according to figure 1, at tightening, and
figure 3 is a schematic view in perspective of the load carrier foot, according to figure 1, in a tightened position and being provided with a load carrier tube.

### Preferred embodiment

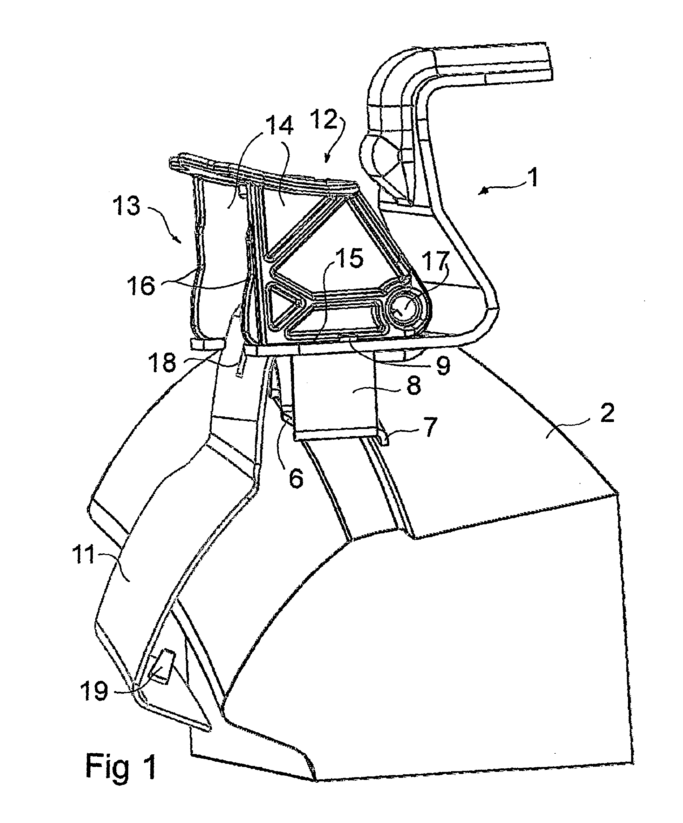

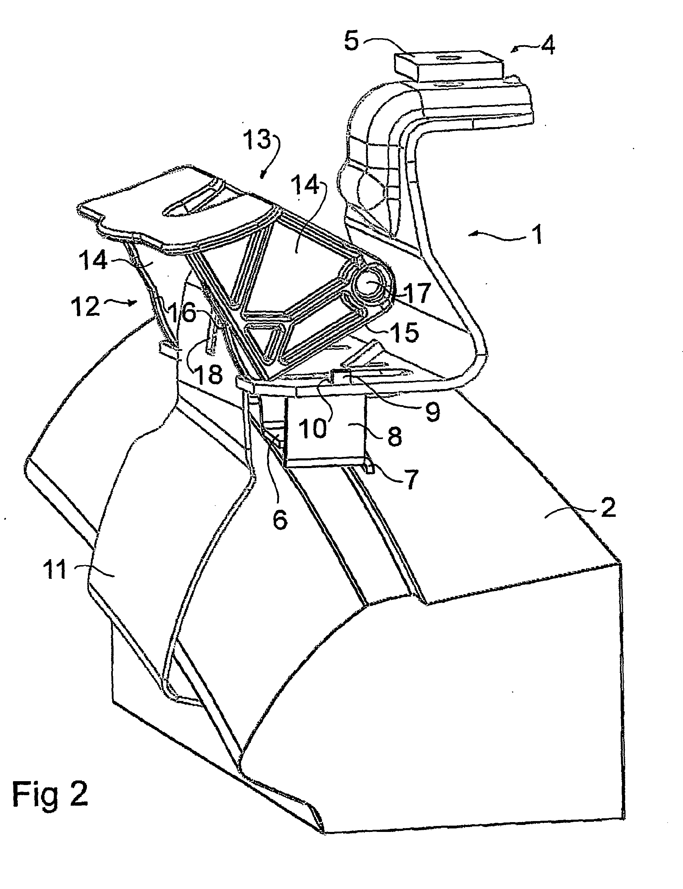

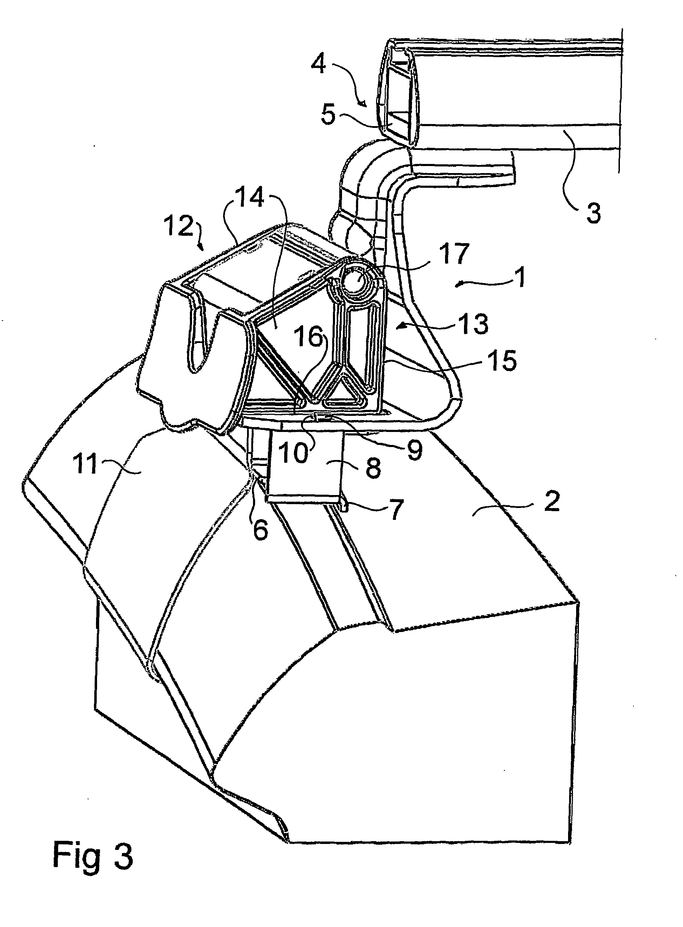

The load carrier foot 1 shown in figure 1 to 3 is intended for clamping of a load carrier around a firm edge portion or a border 2 of the roof. The border 2 is commonly shaped by a body folding of the roof in the area of the transition of the roof to the side of the vehicle or to the opening of the door of a vehicle (not shown). In the figures, only one load carrier foot 1 is shown and to clearly illustrate the invention it is shown without any covering casing. A load carrier comprises, as is commonly known, a load carrier tube 3, which extends across the roof of the vehicle between two along with the roof of the vehicle firmly arranged borders 2 of the roof, with one in each end arranged load carrier foot 1, for clamping of the load carrier around the two essentially parallel borders 2 of the roof. The load carrier tube can of course have optional cross-section, as an example square-shaped or oval profile.

The load carrier foot 1 is formed by bending a plate, preferably made of metal or similar rigid material. The foot is attached at the load carrier tube 3, with a mounting means 4 comprising a fastening plate 5 and a screw (not shown). The mounting means 4 is intended to be moved, in a known manner, into a corresponding opening in the load carrier tube 3 and by aid of a screw firmly clamp the load carrier tube 3 between the fastening plate 5 and the load carrier foot 1. The load carrier foot 1 is slidable along the opening in the load carrier tube 3 and being fixable in the right position related to the essentially parallel borders 2 of the roof. An important part of the invention is that the load carrier tube 3 is turnable fixed at the load carrier foot 1, i.e. only one screw or other similar mounting means being used, simultaneously as the load carrier foot 1 do not have any support surfaces, which may obstruct turning of the load carrier tube 3 relative to the load carrier foot 1. Thus, the load carrier foot 1 having an upper flat support surface for the load carrier tube 3. Contrary to known load carriers, which have a relatively firm fixation of the load carrier tube to the load carrier foot, the load carrier tubes of a load carrier according to the present invention, will bend and twist relative respective load carrier foot at a possible crash, when the load carrier support heavy load. Thereby the damages on the roof of the vehicle will decrease and consequently the repair cost will also decrease.

The load carrier foot 1 comprises a support plate 6, in shape of a bracket, which rests against the roof of the vehicle and having a downwardly bent gripping edge 7, which grips one of the side edge portion or the border 2 of the roof of the vehicle, and two upwardly bent sides 8, which have an upper projection 9 which extend into a corresponding recess 10 in the load carrier foot 1, to fix the support plate 6 to the load carrier foot 1. Through an easy cutting of the two upwardly bent sides 8, it is possible to adapt the height of the support plate, at a low cost, to the design of the roof and the border of the roof of different car models. Preferably, the support plate is made of a steel plate, but naturally, it could also be designed of other material, such as a plastic material or similar.

The load carrier foot 1 also comprising a clamping jaw 11 and a tightening means 12, which is arranged to move the clamping jaw against the other side of the edge portion or the border 2 of the roof of the vehicle, such that the load carrier foot 1 being firmly clamped around the border 2 of the roof, between said clamping jaw 11 and the gripping edge 7 of the support plate 6.

The tightening means 12 comprises in the embodiment shown a lever 13, in shape of a shackle or an handle, with at least one turnable plate 14, having essentially two side edges 15 and 16, which are intended to alternating support against the load carrier foot 1 in a first non tightened position and in a tightened position, respectively. An axle 17 is arranged in the end of the side edge 15, for a turnable fixation of the clamping jaw 11. Preferably, the tightening means 12 comprises two plates 14 and the axle 17 arranged therebetween. The plates 14 are thus designed mainly as right-angled triangles, with the axle 17 located in one acute angle and in which a turning of the plates 14 around the right angle moves the axle 17 from a non tightened position adjacent the support plate 6, where the side edge 15 abuts against the load carrier foot 1, to a tightened position on distance from said support plate 6, where the side edge 16 abuts against the load carrier foot 1.

The clamping jaw 11 is according to the present invention designed of spring steel and having a high tensile yield limit, typically above 800MPa, that is the material admits a huge elastic deformation. By the use of spring steel, it will become possible to absorb occurring tolerances of the border 2 of the roof.

The clamping jaw 11 is movable attached at the load carrier foot 1 and having a groove 18, along which the clamping jaw 11 can move relative the load carrier foot 1. The fixation can be designed of a bayonet joint, a screw or in other known manner. Preferably, the clamping jaw 11 comprises a pin 19, which is intended, in a known manner, to fit into a corresponding hole in the vehicle. At tightening of the lever 13, the axle 10 and the elastic clamping jaw 11 are moved in direction against the support plate 6.

## Claims

1. Load carrier foot (1) for clamping a load carrier at an edge portion or a border (2) of a roof of a vehicle, comprising a support plate (6), which abuts against the roof of the vehicle and having a downwardly bent gripping edge (7), which grips around one side of the edge portion or the border (2) of the roof of the vehicle, a clamping jaw (11) and a tightening means (12), which is arranged to move the clamping jaw (11) against the other side of the edge portion or the border (2) of the roof of the vehicle, such that the load carrier foot (1) being firmly clamped around the border (2) of the roof, between said clamping jaw (11) and the gripping edge (7) of the support plate (6), **characterised in that** said clamping jaw (11) is designed of spring steel with high tensile yield limit above 800MPa, wherein the clamping jaw (11) absorbs occurring tolerances of the border (2) of the roof.

2. Load carrier foot according claim 1, **characterised in that** said support plate (6) comprising at least two upwardly bent sides (8), which fix the support plate (6) to the load carrier foot (1).

3. Load carrier foot according claim 2, **characterised in that** said upwardly bent sides (8) comprising an upper projection (9) which extends into a corresponding recess (10) in the load carrier foot (1), to achieve said fixation of the support plate (6) to the load carrier foot (1).

4. Load carrier foot according claim 3, **characterised in that** said support plate (6) is made of steel, and the height of the upwardly bent sides (8) of the support plate are adapted to the design of the border (2) of the roof of different car models, through cutting, punching or similar of the steel plate.

5. Load carrier foot according claim 4, **characterised in that** a load carrier tube (3) is turnable attached at the load carrier foot (1).

6. Load carrier foot according claim 5, **characterised in that** only one screw or other similar mounting means being used to fasten the load carrier tube (3) at the load carrier foot (1).

7. Load carrier foot according claim 6, **characterised in that** the load carrier foot (1) having an upper flat support surface for the load carrier tube (3).

8. Load carrier foot according claim 5, **characterised in that** the load carrier foot (1) is slidable along a load carrier tube (3) and fixable in right position relative to the borders (2) of the roof.

## Patentansprüche

1. Lastträgerfuß (1) zum Spannen eines Lastträgers an einem Kantenabschnitt oder einem Rand (2) eines Fahrzeugdachs, umfassend: Eine Stützplatte (6), die gegen das Fahrzeugdach anliegt und eine nach unten gebogene Greifkante (7) aufweist, die um eine Seite des Kantenabschnitts oder des Rands (2) des Fahrzeugdachs greift, eine Spannbacke (11) und ein Anziehmittel (12), das die Spannbacke (11) derart gegen die andere Seite des Kantenabschnitts oder des Rands des Fahrzeugsdachs bewegen kann, dass der Lastträgerfuß (1) zwischen der Spannbacke (11) und der Greifkante (7) der Stützplatte (6) fest um den Rand (2) des Dachs gespannt ist, **dadurch gekennzeichnet, dass** die Spannbacke (11) aus einem Federstahl mit einer hohen Streckgrenze von über 800 MPa ausgestaltet ist, wobei die Spannbacke (11) auftretende Toleranzen des Rands (2) des Dachs absorbiert.

2. Lastträgerfuß gemäß Anspruch 1, **dadurch gekennzeichnet, dass** die Stützplatte (6) zumindest zwei nach oben gebogene Seiten (8) umfasst, die die Stützplatte (6) am Lastträgerfuß (1) fixieren.

3. Lastträgerfuß gemäß Anspruch 2, **dadurch gekennzeichnet, dass** die nach oben gebogenen Seiten (8) einen oberen Vorsprung (9) umfassen, der sich in eine entsprechende Aussparung (10) im Lastträgerfuß (1) erstreckt, damit er die Fixierung der Stützplatte (6) am Lastträgerfuß (1) erreicht.

4. Lastträgerfuß gemäß Anspruch 3, **dadurch gekennzeichnet, dass** die Stützplatte (6) aus Stahl hergestellt ist, und die Höhen der nach oben gebogenen Seiten (8) der Stützplatte durch Schneiden, Stanzen oder ähnlichem der Stahlplatte an die Ausgestaltung des Rands (2) des Dachs verschiedener Automobilmodelle angepasst sind.

5. Lastträgerfuß gemäß Anspruch 4, **dadurch gekennzeichnet, dass** ein Lastträgerrohr (3) drehbar am Lastträgerfuß (1) angebracht ist.

6. Lastträgerfuß gemäß Anspruch 5, **dadurch gekennzeichnet, dass** lediglich eine Schraube oder ein ähnliches Befestigungsmittel verwendet wird, um das Lastträgerrohr (3) am Lastträgerfuß (1) zu befestigen.

7. Lastträgerfuß gemäß Anspruch 6, **dadurch gekennzeichnet, dass** der Lastträgerfuß (1) eine obere, flache Stützfläche für das Lastträgerrohr (3) aufweist.

8. Lastträgerfuß gemäß Anspruch 5, **dadurch gekennzeichnet, dass** der Lastträgerfuß (1) entlang des Lastträgerrohrs (3) gleitbar und in einer geeigneten Position relativ zum Rand (2) des Dachs fixierbar ist.

## Revendications

1. Pied de porte-charges (1) pour serrer un porte-charges au niveau d'une partie de bord ou d'une bordure (2) d'un toit d'un véhicule, comprenant une plaque de support (6) qui vient en butée contre le toit du véhicule et a un bord de préhension recourbé vers le bas (7) qui enserre un côté de la partie de bord ou de la bordure (2) du toit du véhicule, un mors (11) et un moyen de serrage (12) qui est agencé pour déplacer le mors (11) contre l'autre côté de la partie de bord ou de la bordure (2) du toit du véhicule, de sorte que le pied de porte-charges (1) est fermement serré autour de la bordure (2) du toit, entre ledit mors (11) et le bord de préhension (7) de la plaque de support (6),
**caractérisé en ce que** ledit mors (11) est réalisé en acier à ressorts avec une limite d'élasticité à la traction élevée supérieure à 800MPa, le mors (11) absorbant les tolérances de la bordure (2) du toit en présence.

2. Pied de porte-charges selon la revendication 1, **caractérisé en ce que** ladite plaque de support (6) comprend au moins deux côtés recourbés vers le haut (8) qui fixent la plaque de support (6) au pied de porte-charges (1).

3. Pied de porte-charges selon la revendication 2, **caractérisé en ce que** lesdits côtés recourbés vers le haut (8) comprennent une saillie supérieure (9) qui s'étend dans un creux correspondant (10) situé dans le pied de porte-charges (1) pour réaliser ladite fixation de la plaque de support (6) au pied de porte-charges (1).

4. Pied de porte-charges selon la revendication 3, **caractérisé en ce que** ladite plaque de support (6) est réalisée en acier, et **en ce que** la hauteur des côtés recourbés vers le haut (8) de la plaque de support est adaptée à la forme de la bordure (2) du toit de différents modèles de voiture, par découpe, poinçonnage ou autres opérations similaires pratiquées sur la plaque d'acier.

5. Pied de porte-charges selon la revendication 4, **caractérisé en ce qu'**un tube de porte-charges (3) est fixé pivotant au pied de porte-charges (1).

6. Pied de porte-charges selon la revendication 5, **caractérisé en ce que** seulement une vis, ou autre moyen de montage similaire, est utilisée pour fixer le tube du porte-charges (3) au pied de porte-charges (1).

7. Pied de porte-charges selon la revendication 6, **caractérisé en ce que** le pied de porte-charges (1) a une surface de support plate supérieure pour le tube de porte-charges (3).

8. Pied de porte-charges selon la revendication 5, **caractérisé en ce que** le pied de porte-charges (1) peut coulisser le long d'un tube de porte-charges (3) et être fixé en position droite par rapport aux bordures (2) du toit.
